Europäisches Patentamt

(19) European Patent Office

Office européen des brevets

(11) Publication number: **0 065 394**
**B1**

(12) **EUROPEAN PATENT SPECIFICATION**

(45) Date of publication of patent specification: **24.09.86**

(21) Application number: **82302338.7**

(22) Date of filing: **07.05.82**

(51) Int. Cl.⁴: **A 23 C 19/02,** A 01 J 25/00 //
A23C19/028

(54) Device and process for the production of cheese curd.

(30) Priority: **15.05.81 SE 8103062**

(43) Date of publication of application:
**24.11.82 Bulletin 82/47**

(45) Publication of the grant of the patent:
**24.09.86 Bulletin 86/39**

(84) Designated Contracting States:
**DE FR GB IT NL**

(56) References cited:
**DE-A-2 344 383**
**DE-A-2 417 926**
**FR-A-1 559 031**
**FR-A-2 247 159**

(73) Proprietor: **ORUM SOGNS MEJERI APS**
**DK-9320 Hjallerup (DK)**

(72) Inventor: **Christiansen, Tage**
**Mollevaenget 11 Vegger**
**DK-9240 Nibe (DK)**
Inventor: **Jensen, Poul Fiil**
**Louisgade 13, st. h.**
**DK-9000 Aalborg (DK)**
Inventor: **Imhof, Werner**
**Gartnervaenget 35**
**DK-9430 Vadum (DK)**
Inventor: **Kjaer, Jens B.**
**Bjornbackvej 23 Orum**
**DK-9320 Hjallerup (DK)**
Inventor: **Kristensen, Kjeld**
**Drosselvej 31**
**DK-9310 Vodskov (DK)**
Inventor: **Kristiansen, Bjarnes**
**Solbakken 18**
**DK-9240 Nibe (DK)**
Inventor: **Pedersen, Bent**
**Poulsgade 4**
**DK-9320 Hjallerup (DK)**

(74) Representative: **Simpson, Ronald Duncan Innes**
**et al**
**A.A.Thornton & Co. Northumberland House**
**303-306 High Holborn**
**London WCIV 7LE (GB)**

## Description

This invention relates to a process and a device for the production of cheese curd from a liquid milk product, and more specifically for coagulating the milk product during passage through a tubular coagulator after initiation of the so-called 'renneting' procedure.

During recent years extensive development has taken place in the mechanisation of cheese manufacture with a view to producing complete continuous processes. New possibilities to produce suitable protein enriched milk products and especially a rapid development within the field of ultra filtration has contributed greatly to the replacement of traditional batch coagulation procedures by a number of more or less continuous coagulation processes including the production of finished cheese direct from the coagulator as well as the production of cheese curd, which after cutting and draining is reintegrated to cheeses of desired shape.

As an attempt to roughly classify the recently developed methods modifying the coagulation step for continuous processes, on one hand attempts have been made to achieve continuous flow through tubular coagulators and on the other hand so called multi-tube processes have been developed, the working principle of which is to fill a large number of parallel, relatively short tube elements, allow the coagulation to occur in quiescent state and press out the cheese curd, whereafter the tubes are refilled.

The physical-chemical characteristics of the milk product being fed to a coagulator naturally effect on the coagulation process. The components of the milk product are mainly coagulable protein (casein), soluble protein, fat and lactose. The fat content seems to have minor effect on the coagulation process. In the following reference is made to the fat free dry substance content (DS). The dry substance content has a significant affect on the characteristics of the formed coagulum and is in particular critical to the matter whether the coagulum can be cut and reintegrated. For direct production of finished cheese from a coagulator tube in general there is required at least about 20% fat-free DS, whereas the upper limit for obtaining a reintegratable cheese coagulum is in the range of about 14—17%.

The start product in modern continuous or semi-continuous coagulation methods is not usually milk or skimmed milk as in traditional cheese making, but a milk product with increased casein content. The method of obtaining such concentrates does not seem to have any crucial effect on the coagulation process. The experiments made in contact with the elaboration of the present invention are based on the concentration by ultra filtration (UF), but other concentration methods can also be used. In comparison with concentrate obtained by evaporation, a UF retentate generally differs in that its lactose concentration and salt concentration remain at about the same level as the corresponding concentrations in the original milk.

Important parameters for coagulation in coagulator tubes are above all the so called renneting conditions. The term "renneting" is here used to include coagulation by means of rennet or by means of other enzymatic systems, acid coagulation by acid fermentation or addition of acid and combinations thereof. The renneting time, that is the period of time between the initiation of the coagulation and the first sign of flocculation, can be regarded as a parameter dependent upon the renneting conditions, and consequently distinguishing the different known coagulation methods in terms of long renneting time and short renneting time can be of help. The most important renneting parameters are: Rennet concentration, temperature, pH and salt concentration. Thus, the renneting time can for example be reduced by: increased temperature; increased amount of rennet; and reduced pH through the addition of fermentation culture or addition of acid. One special method of accelerating the renneting process is so-called cold-renneting, in which rennet is admixed with the milk product at a temperature so low that coagulation does not start until the temperature is raised and it then proceeds very rapidly.

A general philosophy adopted in several suggested processes for the adaption of cheese coagulation to enable a continuous process is the use of renneting conditions which provide rapid coagulation. This is far from surprising since a natural approach in exploiting the multi-tube principle as well as continuous coagulation in tubes of limited length would be to assume that a short residence time is necessary to achieve reasonable production rates and process economy.

One example of such a "fast renneting" process is given in the German patent application 1582979 (Schulz), according to which the milk is first acidified and then brought to coagulate through heating during continuous flow through thin tubes (5—40 mm). The narrow section of the tubes is probably essential to achieve tolerably uniform heating of the cheese curd. Schulz has also suggested a multi-tube process (Milchwissenschaft 24, 1969) in which each tube is filled with preacidified milk which is coagulated in quiescent state within a few minutes, whereafter the tubes are refilled during simultaneous discharge of finished cheese curd.

The German patent application 1792264 (Roiner) describes another fast-renneting method in context with continuous coagulation. To avoid the difficulties in a cold-renneting process of rapidly and uniformly heating the cheese mass to the intended renneting temperature, there is suggested heavy acidification at the renneting temperature before the addition of rennet, after which the coagulation occurs within a period of seconds or some minutes during continuous flow through a coagulator tube.

The suggested rapid coagulation processes have not resulted in satisfactory industrial applications, and probable reasons thereof are i.a. varying cheese quality due to difficulties to achieve precise and uniform control of the coagulation, and problems caused by precoagulation in the equipment for dosing and heat control.

A multi-tube process, in which relatively slow coagulation is carried out by the addition of rennet and starter culture just before feeding the mass into the coagulator, is described in the US patent specification 3,899,596 (Stenne). A large number of vertical short tubes are filled during a filling period, whereafter the coagulation occurs in stationary state, and during a discharge period the curd is pressed out by means of pistons in upward movement. The main drawback of this and other multi-tube methods is the complicated machinery needed for feeding milk product into and discharging and cutting cheese curd from the large number of coagulator tubes required to reach a reasonable plant capacity. Also, the control equipment for coordinating the operation of all these tubes is complicated. The complexity of such multi-tube plants is exemplified by French patent application 2 340 041, having the same inventor as the above mentioned US patent, 30—40 different tubes being mounted like spokes in a wheel-like, rotatable device, and through rotating this device the tubes are successively brought to pass filling and discharge stations.

It is obvious that the main aim within the field of continuous cheese coagulation is to succeed in pumping the start product under coagulation through one single tube or a small number of coagulator tubes at a capacity acceptable for industrial use.

The American patent 4,131,688 describes a continuous process for cheese coagulation, whereat a relatively slow renneting course is used. To avoid the disruption of formed coagulum through turbulence, a laminar flow through cylinders of the length of about 3 m are prescribed. Besides, special inlet means to effect the flow pattern in the cylinders are used. Even if continuous flow is achieved, the flow is very slow and hence the capacity per cylinder low also. The figure 30 l/h is stated, and in such a case a commercial plant of for example 6000 l/h concentrate would require 200 such cylinders. Thus, there is hardly anything gained by the reduced complexity compared with the above mentioned multi-tube plants.

A very special continuous coagulation method is described in the British patent specification 1 410 289 (Stenne). UF-retentate is continuously pumped through a long (20 m) coagulator tube (d = 100 mm). To avoid the adherence of coagulated cheese curd along the tube walls, the walls of the coagulator must be flexible so as to be deformed by means of a pulsation effect imposed to the retentate pumped into the tube. The need for such wall deformations indicates that continuous coagulation in tubes with stiff walls results in that the formed coagulum is broken by cheese curd adhering on the tube walls. Further. also this process seems to be restricted in that the flow velocity cannot be increased over a certain limit due to the risk of coagulum disruption through turbulence. The examples indicate that the velocity through the coagulator should be in the range of 1—2 m/min.

The object of the present invention is to achieve a cheese coagulation process, which by means of simple equipment makes possible production capacities of industrial scale and which is suitable for use in a continuous cheese manufacturing process.

According to the invention there is provided a coagulation process in which the milk product is subjected to 'renneting' by the addition of and admixture with an enzymatic agent and/or an acidifying agent and the mixture is introduced into an inlet end of a coagulator tube, transported through the tube under substantially adiabatic conditions and discharged from the tube as a plug of coagulated cheese curd, the process being characterised in that the mixture is fed to the coagulator tube during feeding periods which are spaced apart by stand still periods, each feeding period being of such duration that during said period there is substantially no coagulation of the mixture fed to the tube during said feeding period, and each stand still period being of such a duration that the mixture fed to the tube during the immediately preceding feeding period forms a coagulum sufficiently firm to be transported through the tube as a continuous plug by the mixture fed to the tube during the next feeding period, the residence time for the mixture in the coagulator tube being at least the duration of one feeding period and one stand still period.

The invention also provides a device for the production of cheese curd by the process of the invention, the device comprising a long coagulator tube of constant cross section having an inlet end and an outlet end, and an arrangement to feed periodically into the inlet end of the coagulator tube a mixture of milk product with a coagulation agent, characterized in that the coagulator tube has a length/diameter ratio greater than 500, and the coagulator tube is enclosed in an envelope provided with insulation or other means to maintain the temperature of the milk product substantially constant during its residence time in the coagulator tube, said temperature being the coagulation temperature obtained through heating the milk product.

It has been surprisingly found, that cheese coagulum can be transported through a long coagulator tube with smooth static walls without coagulum disruption if the renneting conditions are so selected that substantially no coagulation occurs during the period when milk product is fed through the inlet of the coagulator and the successive stand still period is so long that all mass downstream of the uncoagulated mass is carried forward as a continuous coagulum plug. The process according to the invention can also be regarded as a combination of the principle of coagulation in a long coagulator tube, in which continuous flow under relatively slow coagulation has been regarded as the natural way of operation, and the multi-tube principle with coagulation under quiescent state, in which rapid coagulation methods have been preferred. By this combination several surprising results and possibilities have been achieved: besides the fact that an acceptable solution has been given to the problem of curd adhesion to stationary tube walls, the object of providing high flow through a small number of coagulator tubes has been reached. Thus, the period feeding according to the invention enables the use of surprisingly high feed rates without causing coagulum disruption, and flow speeds in the range of 4—20 m/min have proved to be quite realistic. Since this speed exceeds by several times the flow speeds that are possible without coagulum disruption with continuous flow, the stand still periods do not cause any loss in capacity when compared with a corresponding coagulator tube working with a continuous feed, and an overall capacity increase is obtained. As an example of said capacity it may be noted that when cheese curd is produced in a coagulator tube as described in the detailed Example given below with stand still periods of twice the duration of the feeding periods, meaning that three parallel coagulator tubes will enable continuous production, a capacity of 4.000 lit cheese curd per hour is obtained. In a preferred process according to the invention adapted to provide continuous production the milk product after addition of coagulation agent in a dosing plant is fed continuously to a coagulator comprising several coagulator tubes, the coagulator tubes being alternately connected with and disconnected from the dosing plant so that the mixture is continuously fed from the dosing plant to the tubes, and each coagulator tube being connected with and disconnected from the dosing plant during periods corresponding to said feeding periods and stand still periods, respectively.

As mentioned above, the required composition of the milk product to be coagulated can be obtained in different ways. Preferably milk with raised protein concentration is used to reduce the amount of whey that has to be drained if a cheese curd for cutting and reintegration is to be produced, and a milk product with a composition corresponding to the one of finished cheese is used if finished pieces of cheese are to be cut directly from the coagulator. By modern ultra filtration technique the milk can be concentrated with as well as without its fat content. In the latter case fat — for example in the form of cream — can be added after the ultra filtration. In order to reduce the fat losses in connection with the draining procedure, the UF retentate or — if the fat is added after the ultra filtration — the added fat alone should be subjected to homogenization.

Since the process according to the invention is based on coagulation in a small number of long coagulated tubes and relatively slow renneting, the renneting condition should be selected not only with respect to the desired cheese characteristics but also so that a sufficient part of the renneting time remains after introduction of the mass into the coagulator tube. Therefore this remaining part of the renneting time should be at least 3 min for a commercial application of the invention, and a total renneting time in the range of 5—20 min is suitable. According to a preferred embodiment of the invention the starting milk product is first brought to renneting temperature, which is in the range of 25—50°C where rennet is used as the main coagulation agent, and rennet and possibly fermentation culture are added in-line immediately before feeding into the coagulator. However, a certain preacidification is compatible with the process of the invention, and can for example be carried out in a storage tank, from which the milk is pumped to the coagulator with rennet addition and with possible control of the renneting temperature. The dosing of rennet and possible starter culture may be carried out in-line by means of dosing pumps which are synchronized with the feed pump for feeding the milk mass into the coagulator tube. Such equipment is well known to those skilled in the art.

From the combination of slow coagulation with a simple coagulator unit comprising only a few coagulator tubes it follows that each coagulator tube must contain a considerable volume of cheese curd in order to reach a high plant capacity. Since a tube diameter in the range of 5—15 cm has proved to be satisfactory, very long tubes can be required, and this criterion has surprisingly also proved to be compatible with the inventive process. The length/diameter ratio of the coagulator tube may be in excess of 500:1, and preferably in excess of 1000:1. To provide a compact coagulator unit, the coagulator tube can be spirally wound with uniform curvature, but the radius of curvature should be large enough to produce only a moderate increase in flow resistance. The spiral form also facilitates the temperature control of the coagulator tube. In the process of the invention a constant temperature in the milk mass is preferably maintained, especially during the renneting time, but also during the further transport of the coagulum through the coagulator tube. For practical use a sufficient temperature control can be obtained by arranging an insulating envelope around the tube spiral.

The length of the feeding periods and the stand still periods can be varied within relatively wide limits. For optimum conditions the available renneting time should, however, be utilized for the addition of new milk product to the coagulator, and the feeding period is preferably within the range of 0.5—1.2 of the renneting time. The stand still periods must be sufficiently long to allow the transformation of the new fed milk product into a coagulum with sufficient cohesive strength to be transported as a plug during the next feed period. Therefore the total duration of a feeding period and a stand still period should be at least 1.5 times the renneting time, and preferably 2—4 times the renneting time. The length of the coagulator tube and the feeding rate is adjusted so that the total residence time of the mixture in the coagulator tube forms an integral multiple of the feeding period. The mutual ratio between the length of a feeding period and a stand still period gives directly the minimum number of coagulator tubes required for continuous production of cheese curd. Mathematically the number of simultaneously operated coagulator tubes in a coagulator unit may be expressed as $n (1 + S/T)$, where n is the number of simultaneously fed coagulator tubes, S the length of the stand still period and T the length of the feeding period.

The number of feeding periods and stand still periods to which the curd is subjected before being discharged from the coagulator tube must be at least one stand still period and one feeding period, but preferably several such periods are used since it has been experienced that long residence times in the coagulator often improve the characteristics of the discharge coagulum having regard to cutting etc. A prolongation of the residence time neither requires an increase in the number of coagulator tubes, provided that the corresponding increase of the tube length is not limited, for example, by too large a pumping resistance. The capital cost for additional length of tube must be considered low in comparison with installation of further parallel lines including separate equipment for dosing, feeding and cutting etc.

The further treatment of the cheese curd after it is discharged as a plug from one or several coagulator tubes does not fall within the scope of the present invention. Different methods to cut the cheese curd by means of cutting devices directly applied to the outlet of the coagulator to cut the cheese curd into cheese fragments as well as finished pieces of cheese are known. It is however obvious, that the present process, which permits continuous discharge of cheese curd to high capacity from a small number of coagulator tubes, is extremely practical for integration in an entirely continuous cheese process for the production of various cheese products.

### Example

64.000 l milk containing 2.95% fat was pasteurized at 80°C during 15 sec and cooled to 50°C. The product was ultra filtrated to a dry substance concentration (TS) of 27%. The concentrate was heated at 78°C during 30 sec, homogenized at 75 bar and 56°C and conveyed under cooling to a mixing tank. To the tank was also added complementary colour and 0.006% lamb lipas (Chr. Hansen). From the mixing tank 4.100 l/h concentrate was pumped under in-line mixing with 1.5% starter culture of single strain type followed by also in-line mixing of rennet solution with strength 1:100 in an amount of 7% with respect to concentrate, whereafter the renneted concentrate of 33°C was fed directly into a coagulator tube.

The coagulator tube was made of stainless steel having a diameter of 78 mm and a length of 350 m and was designed as a spiral with a diameter of about 3 m. The tube spiral was built into a heat isolated envelope. The milk was pumped into the coagulator for a period of 12 minutes and was kept in quiescent state for 18 minutes after which more milk was pumped again for a period of 12 minutes etc. The total residence time in the coagulator was 60 minutes, thus comprising two feeding periods and two stand still periods.

The continuous coagulum plug discharged during the feeding periods was cut to coagulum fragments of $10 \times 10 \times 10$ mm and was filled into moulds of $290 \times 120 \times 218$ mm. The moulds were turned upside-down after 10, 20 and 30 minutes. The cheese was left in the moulds during 20 hours at room temperature. Then each cheese was divided into 8 pieces and packed under addition of 4.5 kg salt solution of 15° Be' per 15.8 kg cheese. The cheese was stored for two weeks at 5°C. The cheese so obtained contained 57.3% water, 17% fat and had a pH of 4.89. The cheese exhibited a typical structure and taste of traditional Feta cheese.

The starting procedure in the beginning of the feeding period sometimes requires that a relatively large initial pump pressure is provided by the feeding device. According to a preferred embodiment of the feeding device, however, this problem can be overcome by providing the feeding device with means for achieving a controlled gradual increase of the feed rate at an introductory phase of the feeding periods. Preferably, the feeding device is provided with at least one piston pump with a controllable stroke.

### Claims

1. A process for the production of cheese curd from a liquid milk product in which the milk product is subjected to 'renneting' by the addition of and admixture with an enzymatic agent and/or an acidifying agent, the temperature of the mixture is adjusted to a desired coagulation temperature, and the mixture is introduced into an inlet end of a coagulator tube, transported through the tube under substantially adiabatic conditions and discharged as a plug of coagulated cheese curd at an outlet end of the coagulator tube, the renneting conditions being so selected that the part of the renneting time remaining at the introduction of the mixture into the coagulator tube is at least 3 minutes, characterized in that the mixture is fed to the coagulator tube during feeding periods which are spaced apart by stand still periods, each feeding period being of a duration that during said period there is substantially no coagulation of the mixture fed to the tube during said feeding period, and each stand still period being of such a duration that the mixture fed to the tube during the immediately preceding feeding period forms a coagulum sufficiently firm to be transported through the tube as a continuous plug by the mixture fed to the tube during the next feeding period, the residence time for the mixture in the coagulator tube being at least the duration of one feeding period and one stand still period.

2. A process according to claim 1, wherein the residence time of the mixture in the coagulator is at least two feeding periods and two stand still periods.

3. A process according to claim 1 or 2, wherein said feeding period duration is 0.5—1.2 times the renneting time.

4. A process according to any one of the preceding claims, wherein the duration of one feeding period and one stand still period is at least 1.5 times the renneting time.

5. A process according to any one of the preceding claims, wherein the milk product after addition of coagulation agent in a dosing plant is fed continuously to a coagulator comprising a number of coagulator tubes, the coagulator tubes being alternately connected with and disconnected from the dosing plant so that the mixture is continuously fed from the dosing plant to the tubes, each coagulator tube being connected with and disconnected from the dosing plant during periods corresponding to said feeding periods and stand still periods, respectively, and the number of coagulator tubes fed with mixture being $n(1 + S/T)$ where n is the number of tubes fed simultaneously, S is the stand still period and T is the feeding period.

6. A process according to any one of the preceding claims, wherein the total residence time of the mixture in the coagulator tube is an integral multiple of said feeding period duration.

7. A process according to any one of the preceding claims, wherein the milk product is delivered into the coagulator tube during the feeding periods at a velocity of 4—20 m/min.

8. A device for the production of cheese curd by the process defined in claim 1, comprising a long coagulator tube of constant cross section having an inlet end and an outlet end, and an arrangement to feed periodically into the inlet end of the coagulator tube a mixture of milk product with a coagulation agent, characterised in that the coagulator tube has a length/diameter ratio greater than 500, and the coagulator tube is enclosed in an envelope provided with insulation or other means to maintain the temperature of the milk product substantially constant during its residence time in the coagulator tube, said temperature being the coagulation temperature obtained through heating the milk product.

9. A device according to claim 8, wherein said length/diameter ratio of the coagulator tube is greater than 1000.

10. A device according to claim 8 or 9, wherein the internal diameter of the coagulator tube is in the range of from 5 to 15 cm.

11. A device according to claim 8, characterized in that said device to achieve periodic feeding is provided with means for achieving a controlled gradual increase of the feed rate at an introductory phase of said feeding period.

12. A device according to claim 11, characterized in that said device to achieve periodic feeding comprises at least one piston pump with controllable stroke.

**Patentansprüche**

1. Verfahren zur Herstellung von Käsebruch aus einem flüssigen Milchprodukt, bei dem man das Milchprodukt einer Koagulation unterwirft, indem man ein enzymatisches und/oder säuerndes Mittel zugibt und einmischt, die Temperatur der Mischung auf eine gewünschte Koagulationstemperatur einstellt, die Mischung in das Einlaßende eines Koagulationsrohrs einführt, sie unter im wesentlichen adiabatischen Bedingungen durch das Rohr transportiert und als Strang aus koaguliertem Käsebruch am Auslaßende des Koagulationsrohrs ausgibt, wobei man die Koagulierungsbedingungen so einstellt, daß der ab Einbringen der Mischung in das Koagulationsrohr verbleibende Teil der Fällungszeit ("renneting time") mindestens drei Minuten beträgt, dadurch gekennzeichnet, daß man die Mischung dem Koagulationsrohr in Speiseintervallen zuführt, die von Standintervallen getrennt sind, wobei jedes Speiseintervall eine solche Dauer hat, daß die dem Rohr während dieses Speiseintervalls zugeführt Mischung im wesentlichen nicht koaguliert, und daß jedes Standintervall eine solche Dauer hat, daß die dem Rohr im unmittelbar vorhergehenden Speiseintervall zugeführte Mischung ein ausreichend festes Koagulat bildet, um von der im nächsten Speiseintervall in das Rohr eingespeisten Mischung als fortlaufender Strang durch das Rohr transportiert zu werden, wobei die Verweildauer der Mischung im Koagulationsrohr mindestens die Dauer eines Speise- und eines Standintervalls ist.

2. Verfahren nach Anspruch 1, bei dem die Verweildauer der Mischung im Koagulator mindestens zwei Speise- und zwei Standintervalle beträgt.

3. Verfahren nach Anspruch 1 oder 2, bei dem das Speiseintervall das 0,5 bis 1,2-fache der Fällungszeit ("renneting time") beträgt.

4. Verfahren nach einem der vorhergehenden Ansprüche, bei dem Dauer eines Speiseintervalls und eines Standintervalls mindestens das 1,5-fache des Fällungszeit ("renneting time") ist.

5. Verfahren nach einem der vorgehenden Ansprüche, bei dem das Milchprodukt nach der Zugabe eines Koagulationsmittels in einer Dosieranlage kontinuierlich einem Koagulator zugeführt wird, der eine Anzahl von Koagulatorrohren enthält, die abwechselnd an die Dosieranlage an- und von ihr abgeschaltet werden, so daß die Mischung stetig aus der Dosieranlage in die Rohre eingespeist wird, wobei jedes Koagulatorrohr in den Speise- und den Standintervallen entsprechenden Intervallen an die Dosieranlage an- bzw. von ihr abgeschaltet wird, und wobei die Anzahl der mit der Mischung gespeisten Koagulatorrohr $n(1 + S/T)$ ist und n die Anzahl der gleichzeitig gespeisten Rohre, S das Standintervall und T das Speiseintervall bedeuten.

6. Verfahren nach einem der vorgehenden Ansprüche, bei dem die Gesamtverweilzeit der Mischung im Koagulatorrohr ein ganzzahliges Vielfaches der Dauer des Speiseintervalls ist.

7. Verfahren nach einem der vorgehenden Ansprüche, bei dem das Milchprodukt während der
Speiseintervalle mit einer Geschwindigkeit von 4
bis 20 m/min in das Koagulatorrohr eingespeist
wird.

8. Vorrichtung zur Herstellung von Käsebruch
nach dem Verfahren des Anspruchs 1 mit einem
langen Koagulatorrohr mit konstantem Querschnitt und einem Einlaß- und einem Auslaßende
sowie einer Anordnung zum periodischen Einspeisen einer Mischung eines Milchprodukts mit
einem Koagulierungsmittel in das Einlaßende des
Koagulatorrohrs, dadurch gekennzeichnet, daß
das Verhältnis der Länge zum Durchmesser des
Koagulatorrohrs größer als 500 ist und das
Koagulatorrohr in einen Mantel eingehüllt ist, der
mit einer Isolierung oder anderen Einrichtungen
versehen ist, um die Temperatur des Milchprodukts während der Verweilzeit im Rohr im
wesentlichen konstant zu halten, wobei die Temperatur die durch das Erwärmen des Milchprodukts erhaltene Koagulationstemperatur ist.

9. Vorrichtung nach Anspruch 8, bei der das
Verhältnis der Länge zum Durchmesser des
Koagulatorrohrs größer als 1000 ist.

10. Vorrichtung nach Anspruch 8 oder 9, bei der
der Innendurchmesser des Koagulatorrohrs im
Bereich von 5 bis 15 cm liegt.

11. Vorrichtung nach Anspruch 8, dadurch gekennzeichnet, daß die Anordnung zum periodischen Speisen des Koagulatorrohrs mit Mitteln
ausgerüstet ist, um die Speisegeschwindigkeit im
Anfangsbereich des Speiseintervalls kontrolliert
allmählich zu erhöhen.

12. Vorrichtung nach Anspruch 1, dadurch gekennzeichnet, daß die Einrichtung zum periodischen Speisen des Koagulatorrohrs mindestens
eine Kolbenpumpe mit steuerbarem Hub aufweist.

**Revendications**

1. Un procédé pour la préparation de caillé de
fromage à partir d'un produit laitier liquide dans
lequel le produit laitier est soumis à une 'présuration' par addition et mélange d'un agent enzymatique et/ou d'un agent acidifiant, la température
du mélange est ajustée à une température de
coagulation désirée, et le mélange est introduit
dans une extrémité d'etrée d'un tube coagulateur,
transporté dans le tube dans des conditions
sensiblement adiabatiques et déchargé du tube
sous forme d'un bouchon de caillé de fromage
coagulé à une extrémité de sortie du tube
coagulateur, les conditions de présuration étant
choisies de manière que la partie de la durée de
présuration restante lors de l'introduction du
mélange dans le tube coagulateur soit d'au moins
3 minutes, caractérisé en ce que le mélange est
envoyé dans le tube coagulateur pendant des
périodes d'alimentation qui sont espacées par
des périodes d'arrêt, chaque période d'alimentation étant d'une durée telle que pendant
ladite période il n'y a pratiquement pas de
coagulation du mélange envoyé dans le tube
pendant ladite période d'alimentation, et chaque
période d'arrêt ayant une durée telle que le
mélange envoyé dans le tube pendant la période
d'alimentation immédiatement précédente forme
un coagulum suffisamment ferme pour être transporté le long du tube sous forme d'un bouchon
continu par le mélange envoyé dans le tube pendant la période d'alimentation suivante, la durée
du séjour du mélange dans le tube coagulateur
étant au moins égale à la durée d'une période
d'alimentation et d'une période d'arrêt.

2. Un procédé selon la revendication 1, dans
lequel la durée de séjour du mélange dans le
coagulateur est d'au moins deux périodes d'alimentation et deux périodes d'arrêt.

3. Un procédé selon la revendication 1 ou 2,
dans lequel ladite durée de la période d'alimentation est de 0,5 à 1,2 fois la durée de la
présuration.

4. Un procédé selon l'une quelconque des
revendications précédentes, dans lequel la durée
d'une période d'alimentation et d'une période
d'arrêt est d'au moins de 1,5 fois la durée de
présuration.

5. Un procédé selon l'une quelconque des
revendications précédentes, dans lequel le produit laitier, après addition de l'agent de coagulation dans une installation de dosage, est envoyé
de façon continue dans un coagulateur comprenant un certain nombre de tubes coagulateurs, les
tubes coagulateurs étant alternativement connectés à et déconnectés de l'installation de dosage de manière que le mélange soit continuellement envoyé de l'installation de dosage dans les
tubes, chaque tube du coagulateur étant connecté
à et déconnecté de l'installation de dosage pendant des périodes correspondant auxdites périodes d'alimentation et auxdites périodes d'arrêt,
respectivement, et le nombre de tubes coagulateurs alimentés en mélange étant de n (1 + S/T),
où n est le nombre de tubes alimentés simultanément, S la période d'arrêt et T la période d'alimentation.

6. Un procédé selon l'une quelconque des
revendications précédentes, dans lequel la durée
de séjour totale du mélange dans le tube coagulateur est un multiple entier de ladite durée de la
période d'alimentation.

7. Un procédé selon l'une quelconque des
revendications précédentes, dans lequel le produit laitier est envoyé dans le tube coagulateur
pendant les périodes d'alimentation à une vitesse
de 4 à 20 m/min.

8. Un dispositif de préparation de caillé de
fromage par le procédé défini à la revendication 1,
comprenant un long tube coagulateur de section
constante, présentant une extrémité d'entrée et
une extrémité de sortie, et un agencement pour
envoyer périodiquement à l'extrémité d'entrée du tube coagulateur un mélange de produit laitier et avec un agent de coagulation, caractérisé en ce que le tube coagulateur présente un rapport longueur-diamètre supérieur à 500, et le tube coagulateur est enfermé dans une enveloppe munie d'une isolation ou d'autres moyens pour maintenir la température du produit laitier sensiblement constante pendant sa durée de séjour dans le tube coagulateur, ladite température étant la température de coagulation obtenue par chauffage du produit laitier.

9. Un dispositif selon la revendication 8, dans lequel ledit rapport longueur-diamètre du tube coagulateur est supérieur à 1000.

10. Un dispositif selon la revendication 9, dans lequel le diamètre interne du tube coagulateur est de l'ordre de 5 à 15 cm.

11. Un dispositif selon la revendication 8, caractérisé en ce que ledit dispositif pour obtenir une alimentation périodique est muni de moyens pour obtenir une augmentation granduelle et contrôlée de la vitesse d'alimentation pendant une phase introductrice de ladite période d'alimentation.

12. Un dispositif selon la revendication 11, caractérisé en ce que ledit dispositif pour obtenir l'alimentation périodique comprend au moins une pompe à piston à course contrôlable.